Europäisches Patentamt

European Patent Office

Office européen des brevets

(19)

(11) **EP 0 568 114 B1**

(12) **EUROPEAN PATENT SPECIFICATION**

(45) Date of publication and mention
of the grant of the patent:
**06.10.1999 Bulletin 1999/40**

(51) Int Cl.6: **H04M 3/50**, H04M 11/00,
H04M 3/46

(21) Application number: **93110671.0**

(22) Date of filing: **08.07.1986**

(54) **Data analysis systems and methods**

System und Verfahren für Datenanalyse

Systèmes et méthodes pour l'analyse de données

(84) Designated Contracting States:
**DE FR GB NL SE**

(30) Priority: **10.07.1985 US 753299**

(43) Date of publication of application:
**03.11.1993 Bulletin 1993/44**

(60) Divisional application: **99101809.4 / 0 917 335**

(62) Document number(s) of the earlier application(s) in
accordance with Art. 76 EPC:
**86904668.0 / 0 229 170**

(73) Proprietor: **Ronald A. Katz Technology Licensing,
L.P., a California limited partnership
Los Angeles, California 90069 (US)**

(72) Inventor: **Katz, Ronald Alan
Los Angeles, California 90024 (US)**

(74) Representative: **Coles, Graham Frederick et al
Graham Coles & Co.
24 Seeleys Road
Beaconsfield Buckinghamshire HP9 1SZ (GB)**

(56) References cited:
**EP-A- 0 032 410**

• **JEE JOURNAL OF ELECTRONIC ENGINEERING
vol. 19, no. 182, February 1982, TOKYO JP pages
102 - 107 SATOSHI ASO 'TRENDS AND
APPLICATIONS OF VOICE OUTPUT DEVICES'**

## Description

This invention relates to methods and systems for data-analysis, of the kind in which calls from a multiplicity of terminals of a communications facility are received at a receiving station, automated voice response to each call is made from the receiving station to the calling terminal prompting the caller to transmit digital-signal data to the receiving station via the communications facility, digital-signal data transmitted via the communications facility by the caller in response to the prompting is received at the receiving station for processing, a test is carried out to check whether the caller is entitled within a limitation to communicate with the receiving station, and the data received by the receiving station in relation to a multiplicity of calls is analyzed.

A method and system of this specified kind are known from US-A-4 071 698 in the context of a marketing operation conducted over the public telephone network. In such operation, calling customers individually request that a selected audio recording, which may itself be one of the products marketed or may simply be representative of a service or other product offered, is played to him/her over the telephone line for demonstration or other presentational purposes, before an order is placed by the customer. When the customer calls, a check is made to determine whether this is the first time he/she has called and if not whether the rate at which he/she has made calls without placing an order exceeds a limit established by a `free-loader' algorithm. If the call is the first call, or the rate-limit has not been exceeded in relation to time or purchases, the caller is prompted by automated voice messages that lead him/her step by step through successive stages of data entry in automatic, computer processing of the call.

In the stage-by-stage processing of the call, the caller is instructed to key in through operation of the pushbuttons of his/her telephone instrument, data concerning his/her account, and then, once this account information has been verified, is invited to key in a code identifying the selection of product or service for which audio demonstration or other presentation is required. Following the presentation, the customer receives automated instructions for keying in data for ordering the relevant product or service. The data keyed in by the customer is recorded in order to maintain inventory records and for the purpose of determining trends, and also for maintaining an historical record in relation to each customer from which, for example, the customer's preferences can be determined.

It is an object of the present invention to provide a method and system of the said specified kind, that offers improvement over what is known from US-A-4 071 698 for, in particular, fuller data-analysis of calls.

According to one aspect of the present invention, a method of data-analysis of the said specified kind is characterised in that the test checks data related to the call giving the caller a limited entitlement that is consumed by use, to communicate with the receiving station, and that the analysis is related to the data received from entitled callers such as to isolate a subset of such callers.

According to another aspect of the present invention, a system for data analysis of the said specified kind is characterised in that the test means checks data related to the call giving the caller a limited entitlement consumed by use, to communicate with the receiving station, and that programmed means carries out said analysis in accordance with the data received from entitled callers such as to isolate a subset of such callers.

Methods and systems of telephone marketing using automated voice response are also known for hotel or hospital room reservation, railway, air or other ticket reservation from a paper 'Trends and Applications of Voice Output Devices' by Satoshi Aso, J.E.E. Journal of Electronic Engineering, Volume 19, No 182, February 1982, Tokyo, Japan, pages 102-107. This paper also describes a telephone betting method and system in which automated voice response leads a user through a sequence of operations of the push-button keys of his/her telephone to place a bet. Also, a method and system for entering a stake once per week in a lottery, using the public telephone network and involving storage of data concerning each caller and entry of data by him/her in accordance with automated voice instructions, is described in EP-A-0032410.

The method and system of the present invention, however, are of special advantage for the carrying out of statistical analyses based on the calls made. The qualification of callers within a limited, consumable entitlement facilitates analysis of the data received, and this is particularly so through the isolation of a subset of qualified callers.

In the method and the system of the present invention, the caller may be prompted to transmit to the receiving station a key code made known to the caller other than during the call, and in this case the further prompting of the caller may be dependent upon whether the key code transmitted by the caller satisfies a predetermined condition. More especially, the key code may be checked to determine whether it has correspondence with any of a multiplicity of key codes which are stored at the receiving station and which are available for use to satisfy the required condition, on a restricted basis.

Where the public telephone network is used, each caller may be prompted to transmit to the receiving station the telephone number from which he/she is calling, and in this case further prompting of the caller may be dependent upon whether the transmitted number is found to be valid.

An example of a system, and its method of operation, in accordance with the present invention, will now be described, with reference to the accompanying drawings, in which:

FIGURE 1 is a block diagram of a system in accordance with the present invention;

FIGURE 2 is a fragmentary diagrammatic representation of a storage cell of the system of FIGURE 1; and

FIGURE 3 is a flow diagram of an operational format of the system of FIGURE 1.

It is to be understood that the specific structural and functional details of the system and method to be described, are merely representative of one of many possible ways in which the present invention may be implemented.

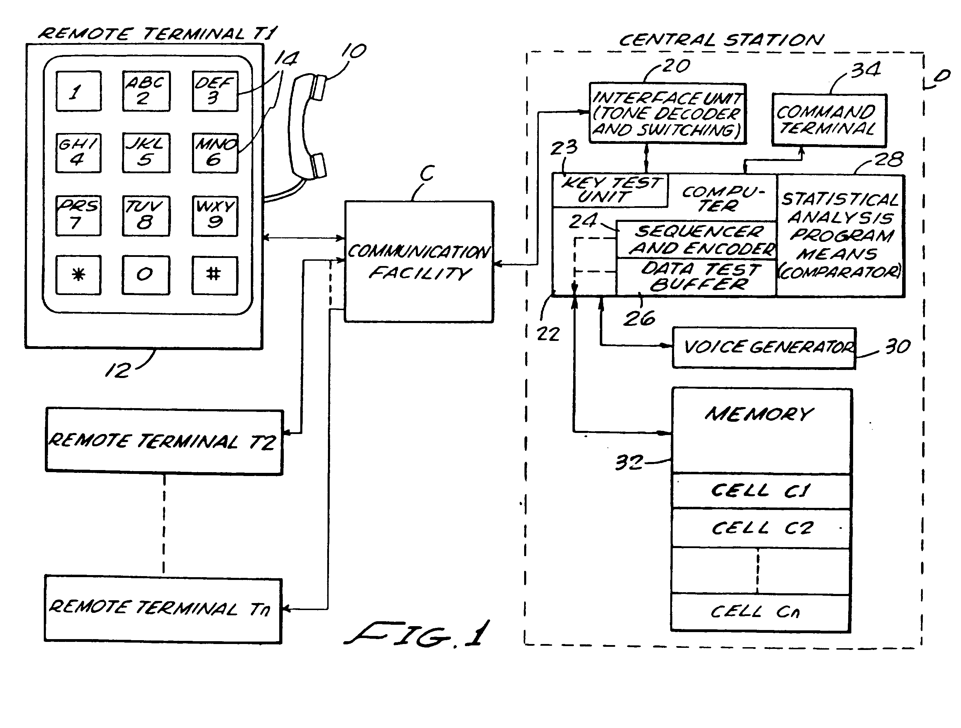

Referring initially to FIGURE 1, a series of remote terminals T1 through Tn are represented. The terminals are generally similar, and accordingly, only the terminal T1 is illustrated in detail. In the disclosed embodiment, the remote terminals T1 through Tn comprise telephone terminals coupled to a communication facility C which may take the form of a comprehensive telephone system for interconnecting any associated terminals. The communication facility C is also coupled to a data development station D in accordance herewith, which is illustrated in some detail.

Generally in accordance with the present development, individual callers use the individual telephone stations T1 through Tn to interface the data development station D through the communication facility C. Also in accordance herewith, the data of individual callers is collected and correlated in the data station D for processing in accordance with external data. As a consequence, a select subset of the callers are isolated and specifically identified.

Several polling (in the sense, for example, of registering responses to a survey invitation) or informing operations can be performed utilizing systems in accordance herewith. For example, a poll of the public might be taken with regard to locating the specific purchasers of a defective and dangerous product.

The public might in this context be polled with the objective of locating persons susceptible to a specific ailment of disease. In a less serious vein, but one of particular commercial significance, the system also might be employed in various public communication game formats or, where legal and deemed in the public welfare, public lotteries.

Considering the system of FIGURE 1 in somewhat greater detail, it is to be understood that the communication facility C has multiplexing capability for individually coupling the terminals T1-Tn to the central station C on request. In the illustrative form of the system, the communication facility C comprises a public telephone facility and the individual terminals T1-Tn take various forms of existing telephone instruments. In that regard, the telephone terminal T1 is represented in some detail to include a hand piece 10 (microphone and earphone) and a panel 12 provided with a rectangular array of push buttons 14.

In accordance with conventional telephone designations, alphabetic and numeric designations are provided on the buttons 14. For example, several of the buttons 14 carry three letters along with a decimal numeral. Specifically, the button designated with the numeral "2" also carries the letters "A", "B", and "C". In that manner, the buttons 14 encompass the numerals "0-9", two symbols, and the alphabet except for the letters "Q" and "Z". Consequently, the buttons 14 accommodate entry of decimal data along with a wide range of alphabetic data. In that regard, the buttons 14 designated with symbols "*" and "#" as well as the numeral "0" can be used by predetermined assignment to represent the letters "Q" and "Z" or any of a variety of other data or commands. Generally in accordance herewith, the buttons 14 are employed to formulate digital data at the central station D in various formats determined by the current specific use of the system.

Considering the central station D in somewhat greater detail, the communication facility C is coupled to an interface unit 20 which incorporates modems, tone decoders, and switching mechanisms. The interface unit 20 affords couplings to a computer 22 which may take the form of a mini-unit programmed for example in accordance with the functions as set forth below. Generally, the computer 22 performs distinct and separate operations. Specifically, the computer 22 may initially qualify a caller. In that regard, if a select group of callers are to have access to the system, a key test unit 23 qualifies individual callers who present a key number. Subsequently, during a data acquisition phase, the computer 22 receives data from individual stations T1-Tn (through the communication facility C) which data is organized, identified, and stored. Thereafter, during a processing phase the computer 22 processes the stored data applying additional data to isolate a select subset of callers.

Sub-blocks in addition to unit 23 also are illustrated in the block designating the computer 22 so as to represent various internal component operating units. In formulating the data records to be stored, the computer 22 employs logic operations which are performed by a sequencer and encoder 24. During statistical processing operations, the computer 22 utilizes a data test buffer 26 along with a statistical analysis program means 28. Exemplary operations and formats for these elements are treated below.

The computer 22 is connected to a voice generator 30 to selectively provide voice messages through the interface unit 20 and the communication facility C to a currently active remote terminal. Also, the computer 22 is coupled to a memory 32 containing a plurality of individual cells C1-Cn which are employed to register the data from individual callers at the terminals. Thus, during a data accumulation phase, the apparatus at the central station D acquires data in the memory 32 utilizing individual cells C1-Cn for the individual callers. Subsequently, during the statistical processing operation, the computer 22 receives data through a command terminal 34 which is tested with regard to the acquired data in the cells C1-Cn of memory 32 so as to select and identify a subset of the individual callers. Thus, the system is effective for use in statistical polling to selectively identify a particular subset of data associated with a subset of individual callers. In that regard, it is important to positively identify the isolated subset of callers and also to enable those callers to verify their identity. The system of the present invention accommodates those needs.

An appreciation of the philosophical operation of a system in accordance with the present invention may now be enhanced by considering an exemplary operation of the illustrative embodiment of FIGURE 1 to isolate a subset of people who are susceptible to a particular disease or infirmity. The exemplary operation might involve a geographical area, as a large city, in which a particular health problem is somewhat acute. For example, a major population centre in which coronary artery disease is a major problem might be polled. Accordingly, persons most susceptible to such disease could be identified for corrective measures.

As an alternative example related to health, the system may process the resultant data from test kits. Specifically, test kits might be sold to concerned persons who would use the kit to obtain certain specific health data. For example, a person might purchase a kit containing the apparatus and instructions to perform various non-invasive procedures to obtain data that could indicate a health condition, e.g. pregnancy. The kit containing the apparatus could also include a key number for qualifying the purchaser to access the computer 22. The qualification would be performed by the key test unit 23 which might simply incorporate a look-up table to check off key numbers as they are used or "consumed".

Returning to the example mentioned above of a general polling for a population centre, people of the metropolitan area would be informed of the availability of a service for statistical health analysis. Accordingly, persons interested in their individual statistical situation would be motivated to utilize the service. Specifically, individual callers would use the remote terminals T1-Tn to contact the central station D through the communication facility C and thereby provide personal information which would enable a statistical analysis in relation to existing data so as to isolate and inform those persons statistically most likely to be in need of corrective measures. In such applications, it may be important that the caller's identity be subject to reliable verification. Other applications may present a critical need for positively verifiable identification to the extent that credit card numbers and/or personal identification numbers may be employed.

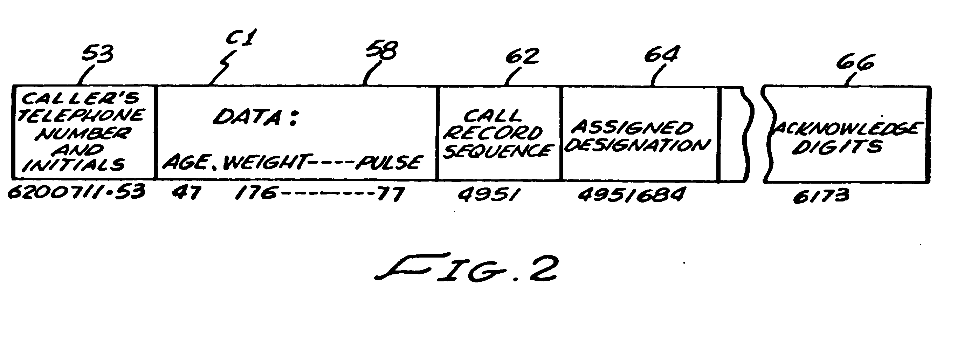

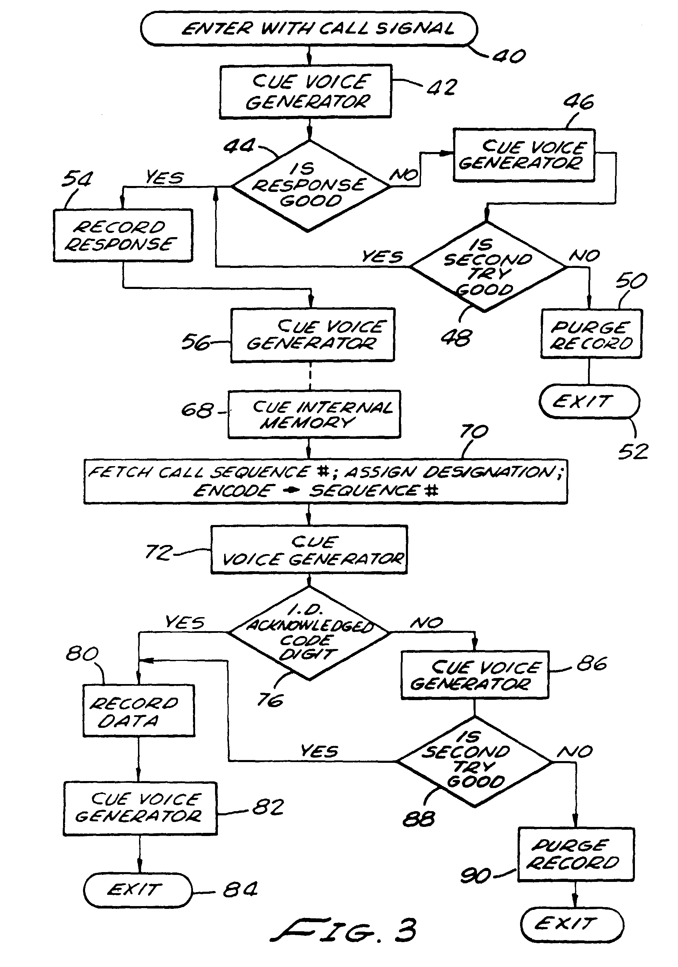

The exemplary operation, with regard to a specific caller, will now be treated referring somewhat concurrently to FIGURES 1, 2, and 3. As indicated above, FIGURE 2 indicates a data storage format and will now be considered with regard to a format in which data is composed in one of the cells C1-Cn of the memory 32. Pursuing the above example in accordance with the assumptions, further assume the existence of a caller at the remote terminal T1 who wishes to pursue health-related information on the basis of statistical analysis. The caller lifts the hand piece 10 and in accordance with conventional techniques actuates the push buttons 14 to establish communication through the facility C with the central station D. Upon receiving the call signal, the interface unit 20 (central station D, FIGURE 1) actuates the computer 22 to cue the voice generator 30. The sequence of operations is represented to be initiated in FIGURE 3 by the "enter" block 40 which is accordingly followed by a "cue voice generator" command block 42. Accordingly, the voice generator 30 (FIGURE 1) formulates speech, a representative form of which might be: "Thank you for participating in the coronary artery disease statistical analysis. Please give us your telephone number by actuating the call buttons on you telephone instrument."

Acting on the instructions, the caller would push the buttons 14 in sequence to indicate his telephone number, i.e. "6200711". The resulting telephone number signals are communicated to the interface unit 20 (FIGURE 1) then applied to the computer 22 for testing as a valid telephone number. The test is indicated by the block 44 (FIGURE 3). If the response is not valid, for example contains an inappropriate number of digits, the operation of block 46 is initiated again cuing the voice generator 30 (FIGURE 1). Accordingly, the voice generator reinstructs the caller, e.g.: "You have not entered a proper telephone number. Please reenter your telephone number by pressing the appropriate call buttons."

The caller is then allotted a predetermined period of time to make a proper entry with the consequence that the system moves to a test operation as indicated by the block 48 (FIGURE 3). Specifically, block 48 poses the query: "Is the second try good?"

If the caller is again unsuccessful, the system purges the record as indicated by the block 50 and the call is terminated as indicated by the block 52. Conversely, if the caller responds with a proper telephone number, the operation sequences to record the response as indicated by the block 54. That is, the caller's telephone is recorded in a specific cell C1-Cn identified with the caller. The format of the cell C1 is indicated in FIGURE 2. The first portion, section 53, contains the caller's telephone number, i.e. "6200711". It is to be noted that, as explained above, if the second attempt to formulate a proper number is successful, as manifest by the block 48 (FIGURE 3), the response is recorded at that stage. In either case, exiting from the block 54 (FIGURE 3) invokes the next operation of again cuing the voice generator as indicated by the block 56.

As an alternative, if a selective-group polling operation is performed, as mentioned above, the caller is qualified by providing the "one-time" key number included in his package. As indicated above, the unit 23 may incorporate a look-up table for proper key numbers. Proper numbers may be coded using any of a wide variety of techniques. As a simple illustrative example, the key may comprise a precise number of digits that always total a particular numerical value.

The key test unit 23 performs the test as an initial qualification. Next, the unit 23 verifies that the key given by a caller has not been consumed by prior use. Thus, the unit 23 may simply incorporate some arithmetic test capability along with a look-up table as well known in the art.

Returning to the detailed example, the process proceeds after the caller is qualified. Specifically, the cue to the voice generator 30 (FIGURE 1) as represented by the block 56 produces a request for further information from the caller. For example, the voice generator might request information by stating: "Please use the telephone buttons to indicate the initials of your first and last names using the asterisk button for the letters Q and Z."

The detailed operation is not represented in FIGURE 3 as it is similar to the operation illustrated by the blocks 42 through 54. However, again, a proper response is registered in the storage cell C1 as illustrated in FIGURE 2 by the number "53" also registered in the first section 53 of the cell.

The cycle of obtaining digital information from the caller next is repeated with respect to substantial specific health data. For example, as illustrated in FIGURE 2, the next section 58 in the cell C1 receives an accumulation of health data, including the caller's age, weight, pulse rate, and so on. Representative digital numbers are illustrated in FIGURE 2.

During the course of telephonic communication, the computer 22 formulates identification data for the caller specifically including: the chronological sequence of the call, the assigned designation of the call, and a set of acknowledgment digits for the call. Such data identification is registered in the assigned cell C1 in accordance with the formate of FIGURE 2 being stored in sections 62, 64, and 66.

It is to be noted that the data may be stored in a coded interrelationship. For example, the acknowledgement digits may be related to the call record sequence. In the illustrative example, the chronological order number of the caller is 4951. The acknowledge digits may be derived from that sequence number. For example, as illustrated, a coded relationship may be established by adding "two" to each of the individual record sequence digits. Considering the example numerically:

| | |
|---|---|
| | 4951 |
| | 2222 |
| Adding without carries | 6173 |

According to the example, the call chronological sequence registered for the caller is 4951 as represented in the section 62 while the acknowledge digits are 6173 as registered in the section 66. Additionally, the computer develops an assigned designation number, e.g. designation "4951684", which is registered in the section 64 and an acknowledge code or digits, e. g. 6173, registered in the section 66. These values are formulated in accordance with conventional number techniques during the data acquisition phase. Specifically, with the exemplary numerals formulated, the operation proceeds.

The computer 22 (FIGURE 1) cues the internal memory. That operation is indicated by the block 68 (FIGURE 3). Thus, the computer 22 fetches the call record sequence number, assigns a designation (if not previously assigned), and encodes the sequence number as the acknowledgement digits (if not previously accomplished). These operations are indicated by the block 70 (FIGURE 3). Next, the computer 22 (FIGURE 1) cues the voice generator as indicated by the block 72 (FIGURE 3) to provide information to the caller. Specifically, for example, the voice generator 30 (FIGURE 1) might state: "This transaction has been designated by the number 4951684, and is further identified by the acknowledgement digits 6173. Please make a record of these numbers as they will be repeated. Specifically, the designation number is 4951684. The acknowledgement digits are 6173. Please acknowledge this transaction by pressing your telephone buttons to indicate the acknowledge digits 6173."

The system then assumes a test mode as indicated by the block 76 (FIGURE 3). If the caller provides the correct acknowledgment digits, the data is confirmed in the record as indicated by the block 80 and registered in the cell C1 (FIGURE 2). Additionally, the voice generator 30 (FIGURE 1) is sequenced as indicated by the block 82 (FIGURE 3) to indicate the close of the communication and that the transaction is terminated as represented by the exit block 84.

In the event that the caller cannot confirm his acknowledgment digits, as indicated by the block 76, a repeat operation is performed as indicated respectively by the blocks 86 and 88. Specifically, the voice generator 30 (FIGURE 1) is cued for a second instructional message. In the event that the second attempt also fails, the data is purged and the call discounted as indicated by block 90. If the second try is successful (test block 88), as indicated by the block 80, the record is perfected as indicated above.

As a result of the likelihood of a large number of calls, as described above, the data cells C1-Cn in the memory 32 (FIGURE 1) are developed with specific information indicative of a statistical sampling of the populace of concern. The data of that statistical sampling may be self-generating of specific conclusions with respect to a subset of individuals, and/or supplemental data may clearly manifest a significant subset. For example, the data may indicate a significant departure from an assumed normal characteristic. Such data, accumulated from the polling, may be considered by logic comparisons in the computer 22 to select the subset of persons who should be isolated.

In addition to the self-generating conclusions available from the received data, the system may involve the introduction of external data. In the physical fitness example, such external data might take the form of national statistical data. In any event, the processing operation usually involves comparison testing which compares caller data from individual cells C1-Cn with test data that is supplied to the statistical analysis program means 28 through the command terminal 34.

As a simple example, health data including age, weight, pulse etc, may be formulated into a composite number reflecting rated values for each of the data elements. Such a composite number may then be placed in the data test buffer 26 for sequential testing against similarly composed numbers formed from the data in the individual cells C1-Cn. Based on such comparative testing, a subset of persons may be identified. Presumably those persons should be informed of their circumstances. However, it is important that identifications be confirmed as accurate. It is in that sense that the assigned designations as registered in the section 64 (FIGURE 2) and the call record sequence, as registered in the block 62, are important. Multiple comparative processing operations may be desirable or necessary to isolate and confirm a subset of significant concern.

In the above example, members of the public were simply invited to use the service. A number of alternatives exist which might well impact on the statistical analysis. For example, callers might be restricted to the purchasers of a specific product as a medical apparatus for measuring blood pressures, heart rates, or so on. In such situations, it will be apparent that the statistical data will be somewhat distorted from an average or normal sampling. Clearly, the computer 22 can be programmed to take into account such considerations. In that regard, the computer 22 might also verify identification data proffered by a caller. Such data might take the form of a credit card number or a personal identification number. Various techniques for verification of such numbers using computer techniques are well known and recognized in the prior art. In any event, a wide variety of possibilities, applications, and formats in accordance herewith will be apparent to those skilled in the art wherein data is assembled, stored, identified, processed by testing to isolate a subset or manifest data with sources reliably confirmed. For example merchandising, polling, selecting, and related operations are practical.

In view of the above explanation of the exemplary system, it will be appreciated that embodiments of the present invention may be employed in many applications to accumulate statistical data, process such data, and define subsets of callers of concern. While certain exemplary operations have been stated herein, and certain detailed structures have been disclosed, the appropriate scope hereof is deemed to be in accordance with the claims as set forth below.

## Claims

1. A method of data-analysis in which calls from a multiplicity of terminals (T1-Tn) of a communications facility (C) are received at a receiving station (D), automated voice response to each call is made from the receiving station (D) to the calling terminal (T1) prompting the caller to transmit digital-signal data to the receiving station (D) via the communications facility (C), digital-signal data transmitted via the communications facility (C) by the caller in response to the prompting is received at the receiving station (D) for processing, a test (44) is carried out to check whether the caller is entitled within a limitation to communicate with the receiving station (D), and the data received by the receiving station in relation to a multiplicity of calls is analyzed (28), characterised in that the test (44) checks data related to the call giving the caller a limited entitlement that is consumed by use, to communicate with the receiving station (D), and that the analysis is related to the data received from entitled callers such as to isolate a subset of such callers.

2. A method according to Claim 1 wherein the caller is prompted (42) to transmit to the receiving station (D) a key code made known to the caller other than during the call, the key code transmitted by the caller in response to the prompting (42) is checked (44) at the receiving station (D) to determine whether it is within the consumable entitlement, and the receiving station (D) proceeds to prompt (56) the caller to transmit the digital-signal data (58) to the receiving station (D) only in the event that the key code has not been consumed.

3. A method according to Claim 2 wherein the checking (44) of the key code is carried out by determining whether it has correspondence with any of a multiplicity of key codes stored (23) at the receiving station (D), and the number of times each stored key code is available for use is restricted.

4. A method according to any one of Claims 1 to 3 wherein the communications facility is a public telephone network (C), each caller is prompted (42) to transmit to the receiving station (D) the telephone number (T1-Tn) from which they are calling, the telephone number received by the receiving station (D) in response to the prompting is checked (44) in the receiving station (D) for validity, and the receiving station (D) proceeds to prompt (56) the caller to transmit said digital-signal data to the receiving station (D) only in the event that the telephone number is determined valid.

5. A method according to any one of Claims 1 to 4 wherein the data received at the receiving station (D) is processed at the receiving station (D) in accordance with whichever of a plurality of available formats is selected by the caller.

6. A system for data analysis in which calls from a multiplicity of terminals (T1-Tn) of a communications facility (C) are received at a receiving station (D), automated voice response to each call is made from the receiving station (D) to the calling terminal (T1) prompting the caller to transmit digital-signal data to the receiving station (D) via the communications facility (C), digital-signal data transmitted via the communications facility (C) by the caller in response to the prompting is received at the receiving station (D) for processing, the receiving station (D) includes test means (23) for checking whether the caller is entitled within a limitation to communicate with the receiving station (D), and the data received by the receiving station in relation to a multiplicity of calls is analyzed (28), characterised in that the test means (23) checks data related to the call giving the caller a limited entitlement consumed by use, to communicate with the receiving station (D), and that programmed means (28) carries out said analysis in accordance with the data received from entitled callers such as to isolate a subset of such callers.

7. A system according to Claim 6 wherein voice-generator means (30) at the receiving station (D) prompts the caller to transmit to the receiving station (D) a key code, the test means (23) checks the key code transmitted by the caller in response to the prompting to determine whether it is within said consumable entitlement, and the voice-generator means (30) is activated to prompt the caller to transmit the digital-signal data (58) to the receiving station (D) only in the event that the key code has not been consumed.

8. A system according to Claim 7 wherein the keycode checking means (23) checks the key code to determining whether it has correspondence with any of a multiplicity of key codes stored at the receiving station (D), and the number of times each stored key code is available for use is restricted.

9. A system according to any one of Claims 6 to 8 wherein the communications facility is a public telephone network (C).

10. A system according to any one of Claims 6 to 9 wherein the data received at the receiving station (D) is processed at the receiving station (D) in accordance with whichever of a plurality of available formats is selected by the caller.

**Patentansprüche**

1. Verfahren zur Datenanalyse, wobei Rufe von mehreren Endgeräten (T1-Tn) einer Kommunikationseinrichtung (C) an einer Empfangsstation (D) empfangen werden, wobei auf jeden Ruf eine automatische Sprachantwort von der Empfangsstation (D) zum rufenden Endgerät (T1) erfolgt, durch die der Anrufer aufgefordert wird, Digitalsignaldaten über die Kommunikationseinrichtung (C) an die Empfangsstation (D) zu übertragen, wobei die durch den Anrufer in Antwort auf die Aufforderung über die Kommunikationseinrichtung (C) übertragenen Digitalsignaldaten an der Empfangsstation (D) empfangen werden, um sie zu verarbeiten, ein Prüfvorgang (44) ausgeführt wird, um zu prüfen, ob der Anrufer eingeschränkt berechtigt ist, mit der Empfangsstation (D) zu kommunizieren, und wobei die durch die Empfangsstation in bezug auf mehrere Rufe empfangenen Daten analysiert werden (28);
dadurch gekennzeichnet, daß
durch den Prüfvorgang (44) mit dem Ruf in Beziehung stehende Daten geprüft werden, wodurch dem Anrufer eine durch Benutzung verbrauchte eingeschränkte Berechtigung erteilt wird, mit der Empfangsstation (D) zu kommunizieren, und daß die Analyse sich auf von berechtigten Anrufern empfangene Daten bezieht, um eine Untergruppe solcher Anrufer zu isolieren.

2. Verfahren nach Anspruch 1, wobei der Anrufer aufgefordert wird (42), einen dem Anrufer bekanntgegebenen Schlüsselcode an die Empfangsstation (D) zu übertragen, der von einem während des Gesprächs mitgeteilten Schlüsselcode verschieden ist, wobei der durch den Anrufer in Antwort auf die Aufforderung (42) übertragene Schlüsselcode an der Empfangsstation (D) überprüft wird (44), um festzustellen, ob der Code sich auf die verbrauchbare Berechtigung bezieht, und wobei die Empfangsstation (D) den Anrufer anschließend nur dann auffordert (56), die Digitalsignaldaten (58) an die Empfangsstation (D) zu übertragen, wenn der Schlüsselcode nicht verbraucht wurde.

3. Verfahren nach Anspruch 2, wobei die Überprüfung (44) des Schlüsselcodes durchgeführt wird, indem festgestellt wird, ob der Code mit einem von mehreren an der Empfangsstation (D) gespeicherten (23) Schlüsselcodes übereinstimmt, wobei die Anzahl begrenzt ist, wie oft jeder gespeicherte Schlüsselcode zur Verwendung verfügbar ist.

4. Verfahren nach einem der Ansprüche 1 bis 3, wobei die Kommunikationseinrichtung ein öffentliches Telefonnetz (C) ist, jeder Anrufer aufgefordert wird (42), die Telefonnummer (T1-Tn), von der aus der Ruf erfolgt, an die Empfangsstation (D) zu übertragen, die durch die Empfangsstation (D) in Antwort auf die Aufforderung empfangene Telefonnummer in der Empfangsstation (D) hinsichtlich ihrer Gültigkeit überprüft wird (44), und wobei die Empfangsstation (D) daraufhin den Anrufer nur dann auffordert (56), die Digitalsignaldaten an die Empfangsstation (D) zu übertragen, wenn die Gültigkeit der Telefonnummer festgestellt wurde.

5. Verfahren nach einem der Ansprüche 1 bis 4, wobei die an der Empfangsstation (D) empfangenen Daten an der Empfangsstation (D) gemäß dem jeweiligen Format verarbeitet werden, das durch den Anrufer aus einer Vielzahl verfügbarer Formate ausgewählt wurde.

6. System zur Datenanalyse, wobei Rufe von mehreren Endgeräten (T1-Tn) einer Kommunikationseinrichtung (C) an einer Empfangsstation (D) empfangen werden, wobei von der Empfangsstation (D) in Antwort auf jeden Ruf eine automatische Sprachantwort zum rufenden Endgerät (T1) erfolgt, durch die der Anrufer aufgefordert wird, Digitalsignaldaten über die Kommunikationseinrichtung (C) an die Empfangsstation (D) zu übertragen, die durch den Anrufer in Antwort auf die Aufforderung über die Kommunikationseinrichtung (C) übertragenen Digitalsignaldaten an der Empfangsstation (D) empfangen werden, um sie zu verarbeiten, die Empfangsstation (D) eine Prüfvorrichtung (23) aufweist, um zu prüfen, ob der Anrufer eingeschränkt berechtigt ist, mit der Empfangsstation (D) zu kommunizieren, und wobei die durch die Empfangsstation in bezug auf mehrere Rufe empfangenen Daten analysiert werden (28);

dadurch gekennzeichnet, daß

die Prüfeinrichtung (23) mit dem Ruf in Beziehung stehende Daten überprüft, wodurch dem Anrufer eine durch Verwendung verbrauchte eingeschränkte Berechtigung erteilt wird, mit der Empfangsstation (D) zu kommunizieren, und dadurch daß eine programmierte Einrichtung (28) die Analyse gemäß den von berechtigten Anrufern empfangenen Daten ausführt, um eine Untergruppe solcher Anrufer zu isolieren.

7. System nach Anspruch 6, wobei eine Spracherzeugungseinrichtung (30) an der Empfangsstation (D) den Anrufer auffordert, einen Schlüsselcode an die Empfangsstation (D) zu übertragen, wobei die Prüfeinrichtung (23) den durch den Anrufer in Antwort auf die Aufforderung übertragenen Schlüsselcode prüft, um festzustellen, ob der Code einer verbrauchbaren Berechtigung zugeordnet ist, und die Spracherzeugungseinrichtung (30) nur dann aktiviert wird, um den Anrufer aufzufordern, die Digitalsignaldaten (58) an die Empfangsstation (D) zu übertragen, wenn der Schlüsselcode nicht verbraucht wurde.

8. System nach Anspruch 7, wobei die Schlüsselcode-Prüfeinrichtung (23) den Schlüsselcode überprüft, um festzustellen, ob der Code mit einem von mehreren an der Empfangsstation (D) gespeicherten Schlüsselcodes übereinstimmt, wobei die Anzahl begrenzt ist, wie oft jeder gespeicherte Schlüsselcode zur Verwendung verfügbar ist.

9. System nach einem der Ansprüche 6 bis 8, wobei die Kommunikationseinrichtung ein öffentliches Telefonnetz (C) ist.

10. System nach einem der Ansprüche 6 bis 9, wobei die an der Empfangsstation (D) empfangenen Daten an der Empfangsstation (D) gemäß dem jeweiligen Format verarbeitet werden, das durch den Anrufer aus einer Vielzahl verfügbarer Formate ausgewählt wurde.

**Revendications**

1. Méthode d'analyse de données, dans laquelle des appels en provenance d'une multiplicité des terminaux (T1-Tn) d'un réseau de communication (C) sont reçus dans une station de réception (D), une réponse vocale automatique à chaque appel est envoyée de l'installation de réception (D) au terminal d'appel (T1) invitant le demandeur à transmettre des données de signaux numériques à la station de réception (D) par l'intermédiaire du réseau de communication (C), les données de signaux numériques transmises par l'intermédiaire du réseau de communication (C) par le demandeur en réponse à l'invitation sont reçues à la station de réception (D) à des fins de traitement, un test (44) est effectué pour vérifier si le demandeur avait le droit, à l'intérieur de certaines limites, de communiquer avec la station de réception (D), et les données reçues par la station de réception en relation avec une multiplicité d'appels sont analysées (28), caractérisé en ce que le test (44) vérifie si les données relatives à l'appel donnent au demandeur un droit limité, consommé à l'usage, de communiquer avec la station de réception (D) et en ce que l'analyse est relative aux données reçues de demandeurs autorisés de façon à isoler un sous-groupe de ces demandeurs.

2. Méthode selon la revendication 1, dans laquelle le demandeur est invité (42) à transmettre à la station de réception (D) un code d'identification rendu connu au demandeur autrement que pendant l'appel, le code d'identification transmis par le demandeur en réponse à l'invitation (42) est vérifié (44) à la station de réception (D) pour déterminer s'il se trouve à l'intérieur de l'autorisation consommable, et la station de réception (D) est activée pour inviter (56) le demandeur à transmettre les données de signaux numériques (58) à la station de réception (D) seulement dans le cas où le code d'identification n'a pas été consommé.

3. Méthode selon la revendication 2, dans laquelle la vérification (44) du code d'identification est effectuée en déterminant s'il correspond avec l'un quelconque d'une multiplicité de codes d'identification stockés (23) à la station de réception (D), et le nombre de fois que chaque code d'identification stocké est disponible pour être utilisé est restreint.

4. Méthode selon l'une quelconque des revendications 1 à 3, dans laquelle le réseau de communication est un réseau de téléphone public (C), chaque demandeur est invité (42) à transmettre à la station de réception (D) le numéro de téléphone (T1-Tn) dont il appelle, la validité du numéro de téléphone reçu par la station de réception (D) en réponse à l'invitation est vérifiée (44) dans la station de réception (D), et la station de réception (D) est activée pour inviter (56) le demandeur à transmettre lesdites données de signaux numériques à la station de réception (D) seulement dans le cas où le numéro de téléphone est déterminé comme étant valide.

5. Méthode selon l'une quelconque des revendications 1 à 4, dans laquelle les données reçues à la station de réception (D) sont traitées à la station de réception (D) selon celui d'une multiplicité de formats disponibles qui a été sélectionné par le demandeur.

6. Système pour analyse de données, dans lequel des appels en provenance d'une multiplicité de terminaux (T1-Tn) d'un réseau de communication (C) sont reçus à une station de réception (D), une réponse vocale automatique à chaque appel est envoyée de la station de réception (D) au terminal appelant (T1) pour inviter le demandeur à transmettre des données de signaux numériques à la station de réception (D) par l'intermédiaire du réseau de communication (C), les données de signaux numériques transmises par l'intermédiaire du réseau de communication (C) par le demandeur en réponse à l'invitation sont reçues à la station de réception (D) à des fins de traitement, la station de réception (D) comprend des moyens de test (23) pour vérifier si le demandeur a le droit (à l'intérieur de certaines limites) de communiquer avec la station de réception (D), et les données reçues par la station de réception en relation avec une multiplicité d'appels sont analysées (28), caractérisé en ce que les moyens de test (23) vérifient si les données relatives à l'appel donnent au demandeur un droit limité, consommé à l'usage, de communiquer avec la station de réception (D), et en ce que des moyens programmés (28) effectuent ladite analyse en fonction des données reçues de demandeurs autorisés de façon à isoler un sous-groupe de ces demandeurs.

7. Système selon la revendication 6, dans lequel des moyens de génération vocale (30) à la station de réception (D) invitent le demandeur à transmettre à la station de réception (D) un code d'identification, les moyens de test (23) vérifient le code d'identification transmis par le demandeur en réponse à l'invitation pour déterminer s'il se trouve à l'intérieur de ladite autorisation consommable, et les moyens de génération vocale (30) sont activés pour inviter le demandeur à transmettre les données de signaux numériques (58) à la station de réception (D) seulement dans le cas où le code d'identification n'a pas été épuisé.

8. Système selon la revendication 7, dans lequel les moyens de vérification du code d'identification (23) vérifient le code d'identification pour déterminer s'il correspond avec l'un quelconque d'une multiplicité de codes d'identification stockés dans la station de réception (D), et le nombre de fois que chaque code d'identification stocké est disponible pour être utilisé est restreint.

9. Système selon l'une quelconque des revendications 6 à 8, dans lequel le réseau de communication est un réseau de téléphone public (C).

10. Système selon l'une quelconque des revendications 6 à 9, dans lequel les données reçues à la station de réception (D) sont traitées à la station de réception (D) en fonction de celui d'une multiplicité de formats disponibles qui a été sélectionné par le demandeur.

REMOTE TERMINAL T1

CENTRAL STATION

| 1 | ABC 2 | DEF 3 |
| GHI 4 | JKL 5 | MNO 6 |
| PRS 7 | TUV 8 | WXY 9 |
| * | O | # |

14

10

12

COMMUNICATION FACILITY

C

REMOTE TERMINAL T2

REMOTE TERMINAL Tn

INTERFACE UNIT
(TONE DECODER
AND SWITCHING)

20

COMMAND
TERMINAL

34

KEY TEST
UNIT

23

COMPU-
TER

STATISTICAL
ANALYSIS
PROGRAM
MEANS
(COMPARATOR)

28

SEQUENCER
AND ENCODER

24

DATA TEST
BUFFER

22

26

VOICE GENERATOR

30

32

MEMORY

CELL C1

CELL C2

CELL Cn

D

FIG.1

EP 0 568 114 B1

FIG. 2

EP 0 568 114 B1

ENTER WITH CALL SIGNAL —— 40

CUE VOICE GENERATOR —— 42

44 —— IS RESPONSE GOOD

NO —→ CUE VOICE GENERATOR —— 46

54 —— YES

RECORD RESPONSE —— 54

IS SECOND TRY GOOD —— 48

YES

NO —→ PURGE RECORD —— 50

CUE VOICE GENERATOR —— 56

CUE INTERNAL MEMORY —— 68

EXIT —— 52

FETCH CALL SEQUENCE #; ASSIGN DESIGNATION; ENCODE ➔ SEQUENCE # —— 70

CUE VOICE GENERATOR —— 72

I.D. ACKNOWLEDGED CODE DIGIT —— 76

YES

NO —→ CUE VOICE GENERATOR —— 86

RECORD DATA —— 80

IS SECOND TRY GOOD —— 88

YES

NO —→ PURGE RECORD —— 90

CUE VOICE GENERATOR —— 82

EXIT —— 84

EXIT

FIG. 3